(19) Europäisches Patentamt
European Patent Office
Office européen des brevets

(11) EP 4 704 288 A1

(12) EUROPÄISCHE PATENTANMELDUNG

(43) Veröffentlichungstag:
04.03.2026 Patentblatt 2026/10

(21) Anmeldenummer: 24196574.8

(22) Anmeldetag: 27.08.2024

(51) Internationale Patentklassifikation (IPC):
H02J 3/38 (2026.01)    H02M 7/48 (2007.01)

(52) Gemeinsame Patentklassifikation (CPC):
H02M 7/48; H02J 3/381; H02J 2101/24

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Siemens Aktiengesellschaft
80333 München (DE)

(72) Erfinder:
• Lin, Guosong
  91056 Erlangen (DE)
• Schmidt, Thomas
  91522 Ansbach (DE)
• Müller, Holger
  91096 Möhrendorf (DE)

(74) Vertreter: Siemens Patent Attorneys
Postfach 22 16 34
80506 München (DE)

(54) **VORRICHTUNG UND VERFAHREN ZUR BEREITSTELLUNG EINER ERSTEN WINKELGESCHWINDIGKEIT UND EINER SPANNUNGSAMPLITUDE ZUR BESTIMMUNG EINES SOLLSTROMSTÄRKEWERTES FÜR EINE REGELUNG**

(57) Es wird eine Vorrichtung zur Bereitstellung einer ersten Winkelgeschwindigkeit und einer Spannungsamplitude zur Bestimmung eines Sollstromstärkewertes für eine Regelung vorgeschlagen, wobei die Vorrichtung eine zweite Steuerungseinheit umfasst, wobei eine erste Steuerungseinheit als ein elektrischer Anteil und die zweite Steuerungseinheit als ein mechanischer Anteil einer Übertragungsfunktion einer virtuellen Synchronmaschine ausgebildet sind, wobei die zweite Steuerungseinheit als eine Pf-Kopplung ausgebildet ist, welche zu einer Verwendung wenigstens einer elektrischen Eingangsgröße und zur Bereitstellung der Spannungsamplitude und einer zweiten Winkelgeschwindigkeit ausgebildet ist, wobei die Vorrichtung eine dritte Steuerungseinheit umfasst, welche dazu ausgebildet ist, eine dritte Winkelgeschwindigkeit in Abhängigkeit der elektrischen Eingangsgröße bereitzustellen, wobei die Vorrichtung dazu ausgebildet ist, die erste Winkelgeschwindigkeit in Abhängigkeit der zweiten und dritten Winkelgeschwindigkeit zu ermitteln und bereitzustellen.

FIG 1

EP 4 704 288 A1

**Beschreibung**

Die Erfindung betrifft eine Vorrichtung gemäß dem Oberbegriff des Patentanspruches 1 sowie ein Verfahren gemäß dem Oberbegriff des Patentanspruches 10.

Eine virtuelle Synchronmaschine kombiniert die Vorteile der aktuellen Stromrichtertechnik mit den netzwichtigen Merkmalen der elektromechanischen Synchronmaschine. Die virtuelle Synchronmaschine umfasst einen Einspeisewechselrichter mit einem spezifischen Steuerungs- und Regelungskonzept, der den Erzeuger am Stromnetz (Netz) wie eine elektromechanische Synchronmaschine wirken lässt. Das Konzept umfasst eine Erfassung einer Netzspannung, eine Berechnung eines Statorstroms auf einem schnellen Prozessor und eine Einprägung des errechneten Maschinenstromwerts auf einen phasenstromgeregelten Wechselrichter zur Einspeisung ins Netz.

Die Analogie zur Synchronmaschine hat mehrere Funktionsmerkmale. Dezentrale Erzeuger können ohne zusätzliche Kommunikationsverbindung betrieben werden, was zu einer netzglobalen Frequenz- und einer netzlokalen Spannungsinteraktivität zwischen den virtuellen Synchronmaschinen führt. Alle frei parametrierbaren Maschinenkennwerte wirken sich elektrisch auf das Stromnetz aus, insbesondere eine virtuelle Dämpfung und virtuelle Masse. Die virtuelle Dämpfung ermöglicht den stabilen Betrieb vieler Einzelerzeuger, während die virtuelle Masse die kurzzeitige Frequenzstabilität des Stromnetzes gewährleistet.

Die vorteilhaften Eigenschaften der virtuellen Synchronmaschine für den stabilen Betrieb von Einzelerzeugern und die Frequenzstabilität des Stromnetzes werden zu einem Nachteil, wenn eine dynamische Anpassung der Sollwirkleistung gefordert ist. Deutlich wird dies am Beispiel einer Photovoltaikanlage, welche aufgrund der Trägheit der virtuellen Synchronmaschine bei einer raschen Leistungsänderung zuerst einen lokalen Batteriespeicher laden würde und erst dann in das Netz einspeisen kann.

Der vorliegenden Erfindung liegt die Aufgabe zugrunde, eine dynamischere Bestimmung eines Sollstromstärkewertes für eine Regelung bereitzustellen.

Die Aufgabe wird durch eine Vorrichtung mit den Merkmalen des unabhängigen Patentanspruches 1 sowie durch ein Verfahren mit den Merkmalen des unabhängigen Patentanspruches 10 gelöst. In den abhängigen Patentansprüchen sind vorteilhafte Ausgestaltungen und Weiterbildungen der Erfindung angegeben.

Die Vorrichtung zur Bereitstellung einer ersten Winkelgeschwindigkeit und einer Spannungsamplitude zur Bestimmung eines Sollstromstärkewertes für eine Regelung, umfasst eine zweite Steuerungseinheit, wobei eine erste Steuerungseinheit als ein elektrischer Anteil und die zweite Steuerungseinheit als ein mechanischer Anteil einer Übertragungsfunktion einer virtuellen Synchronmaschine ausgebildet sind, wobei die zweite Steuerungseinheit als eine Pf-Kopplung ausgebildet ist, welche zu einer Verwendung wenigstens einer elektrischen Eingangsgröße und zur Bereitstellung der Spannungsamplitude und einer zweiten Winkelgeschwindigkeit ausgebildet ist. Erfindungsgemäß umfasst die Vorrichtung eine dritte Steuerungseinheit, welche dazu ausgebildet ist, eine dritte Winkelgeschwindigkeit in Abhängigkeit der elektrischen Eingangsgröße bereitzustellen, wobei die Vorrichtung dazu ausgebildet ist, die erste Winkelgeschwindigkeit in Abhängigkeit der zweiten und dritten Winkelgeschwindigkeit zu ermitteln und bereitzustellen.

Die Steuerungseinheiten können in Software ausgebildet sein und dadurch integriert auf einer gemeinsamen Hardware betrieben werden. Eine Ausbildung in der die Steuerungseinheiten als dedizierte elektronische Baugruppen vorliegen und in Echtzeit kommunizieren, ist ebenfalls möglich.

Die Virtuelle Synchronmaschine kombiniert die Vorteile moderner Stromrichtertechnik mit den netzrelevanten Eigenschaften einer elektromechanischen Synchronmaschine. Sie nutzt einen Einspeisewechselrichter mit spezifischer Steuerung, der den Erzeuger im Netz wie eine traditionelle Synchronmaschine erscheinen lässt.

Die Pf-Kopplung als Ausbildung der zweiten Steuerungseinheit kann einen Bezug zwischen wenigstens einem Leistungswert als Eingangsgröße und einer Frequenz beispielsweise ihrer Umrechnung in eine Winkelgeschwindigkeit als Ausgangsgröße herstellen.

Die Übertragungsfunktion beschreibt ein Verhältnis zwischen einem Ausgangs- und Eingangssignal eines linearen zeitinvarianten Systems in einem Frequenzbereich. Sie wird häufig in der Regelungstechnik und Signalverarbeitung verwendet, um ein Systemverhalten zu beschreiben beziehungsweise zu modellieren.

Die dynamischere Bereitstellung, insbesondere einer Winkelgeschwindigkeit oder eines abhängigen Sollstromstärkewerts, meint eine situationsabhängige Verkürzung oder Verlängerung einer Anregelzeit der für die Bereitstellung verantwortlichen Steuerungseinheiten.

Die Anregelzeit kann ein Maß für eine Verzögerung und/oder eine Dämpfung zur Erreichung eines Zielwertes, Sollwerts oder auch Ausgangswerts einer Steuerungseinheit oder auch Regelungseinheit sein. Die Anregelzeit kann, insbesondere als eine Zeitkonstante, durch die Übertragungsfunktion umfasst sein.

Der Sollstromstärkewert kann neben einem Wert für eine Stromstärke auch einen Phasenwinkel umfassen. Mit anderen Worten kann der Sollstromstärkewert mit einem Soll-Phasenwinkel behaftet sein.

Durch die vorliegende Erfindung wird eine Vorrichtung zu einer vorteilhaften modularen und dynamischeren Bereitstellung der ersten Winkelgeschwindigkeit beschrieben. Das ist deshalb der Fall, da die zweite und dritte Steuerungseinheit als zwei getrennte Module, insbesondere als getrennte Funktionen, ausgebildet sein können, wodurch die zweite und dritte Winkelgeschwindigkeit getrennt ermittelt werden können. Hierbei kann, insbesondere ein modulweiser Tausch, eine modulweise Parametrierung und/oder eine modulweise Änderung der Eingangswerte zu einer vorteilhaften dynamischeren Bereitstellung der ersten Winkelgeschwindigkeit beitragen.

Das erfindungsgemäße Verfahren zur Bereitstellung einer ersten Winkelgeschwindigkeit und einer Spannungsamplitude zur Bestimmung eines Sollstromstärkewertes für eine Regelung, erfolgt dadurch, dass eine erste Steuerungseinheit als ein elektrischer Anteil und eine zweite Steuerungseinheit als ein mechanischer Anteil einer Übertragungsfunktion einer virtuellen Synchronmaschine ausgebildet sind, wobei die zweite Steuerungseinheit als eine Pf-Kopplung ausgebildet ist, welche wenigstens eine elektrische Eingangsgröße verwendet und die Spannungsamplitude und eine zweite Winkelgeschwindigkeit bereitstellt, wobei erfindungsgemäß eine dritte Winkelgeschwindigkeit mittels einer dritten Steuerungseinheit und in Abhängigkeit der elektrischen Eingangsgröße bereitgestellt wird, wobei die erste Winkelgeschwindigkeit in Abhängigkeit der zweiten und dritten Winkelgeschwindigkeit ermittelt und bereitgestellt wird.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Durch die vorliegende Erfindung wird ein Verfahren zu einer vorteilhaften dynamischeren Bereitstellung der ersten Winkelgeschwindigkeit beschrieben. Das ist deshalb der Fall, da mit der dritten Winkelgeschwindigkeit eine weitere Teilgröße zur Ermittlung der ersten Winkelgeschwindigkeit eingeführt wird und die gesteigerte Dynamik vorteilhafterweise über das spezifische Systemverhalten der dritten Steuerungseinheit erreicht werden kann, ohne das Systemverhalten der zweiten Steuerungseinheit ändern zu müssen.

Es ergeben sich zur erfindungsgemäßen Vorrichtung gleichartige, gleichwertige und gleichwirkende Vorteile und/oder Ausgestaltungen des erfindungsgemäßen Verfahrens.

Gemäß einer vorteilhaften Ausgestaltung umfasst die Vorrichtung einen Integrator, wobei die erste Winkelgeschwindigkeit als eine Eingangsgröße für den Integrator vorgesehen ist, wobei der Integrator dazu ausgebildet ist, einen Phasenwinkel abhängig von der ersten Winkelgeschwindigkeit zu ermitteln und für die erste Steuerungseinheit bereitzustellen.

Der Integrator kann die mathematische Integration wenigstens einer Eingangsgröße ausführen und deren Ergebnis als eine Ausgangsgröße bereitstellen. Hierzu kann der Integrator als eine Funktion in Software implementiert sein.

Dadurch ist es vorteilhafterweise möglich, die erste Steuerungseinheit ohne einen eigenen Integrator in Software auszuführen und den Phasenwinkel direkt zu verwenden. Mit anderen Worten führt die Integration als separate Operation zu einer vorteilhaften stärkeren Modularisierung der Vorrichtung.

In einer vorteilhaften Weiterbildung der Erfindung weist die zweite und dritte Steuerungseinheit jeweils eine Übertragungsfunktion mit einer zugehörigen Anregelzeit auf, wobei die Anregelzeit der Übertragungsfunktion der dritten Steuerungseinheit kleiner oder gleich der Anregelzeit der Übertragungsfunktion der zweiten Steuerungseinheit ist.

Dadurch kann vorteilhafterweise die kleinere Anregelzeit der dritten Steuerungseinheit dazu führen, dass die Vorrichtung bei einer Änderung der elektrischen Eingangsgrößen, schneller mit einer Änderung der ersten Winkelgeschwindigkeit reagiert.

Gemäß einer vorteilhaften Ausgestaltung ist die zweite Steuerungseinheit dazu ausgebildet, als elektrische Eingangsgröße wenigstens eine Wirkleistung und/oder eine Spannungsamplitude zu verwenden.

Dadurch ist es vorteilhafterweise möglich, auf einen sich ändernden Wirkleistungswert, insbesondere beim Anschluss neuer Verbraucher an ein Stromnetz zu reagieren. Hierbei kann die Wirkleistung als eine Sollwirkleistung betrachtet werden, wobei die Vorrichtung auf eine sich ändernde Sollwirkleistung mit einer Bereitstellung einer neuen ersten Winkelgeschwindigkeit reagiert.

In einer vorteilhaften Weiterbildung der Erfindung ist die dritte Steuerungseinheit dazu ausgebildet, über ein Schaltsignal zuschaltbar zu sein.

Das Schaltsignal kann dazu dienen ein Öffnen und/oder Schließen eines elektromechanischen Relais oder eines Halbleiterschalter zu bewirken und die dritte Steuerungseinheit zuzuschalten oder wegzuschalten. Das Schaltsignal kann auch als Eingangssignal für die dritte Steuerungseinheit dienen, um einen Softwareparameter zu beschreiben, wobei mittels des Parameters festlegt werden kann, ob eine Zuschaltung der dritten Steuerungseinheit erfolgt.

Dadurch kann vorteilhafterweise die dritte Steuerungseinheit nach Bedarf zugeschaltet werden. Dies kann insbesondere der Fall sein, wenn eine dynamischere Bereitstellung der ersten Winkelgeschwindigkeit benötigt wird. Andererseits kann die dritte Steuerungseinheit auch nach Bedarf weggeschaltet werden, wodurch die Bereitstellung der ersten Winkelgeschwindigkeit mit der Anregelzeit einer virtuellen Synchronmaschine erfolgt.

Gemäß einer vorteilhaften Ausgestaltung kann die erste Winkelgeschwindigkeit eine gewichtete Summe aus der zweiten und dritten Winkelgeschwindigkeit umfassen.

Besonders bevorzugt ist die erste Winkelgeschwindigkeit als eine gewichtete Summe aus der zweiten und dritten Winkelgeschwindigkeit ausgebildet. Mit anderen Worten ist $\omega_1 = w_1 \cdot \omega_2 + w_2 \cdot \omega_3$, mit $w_1$ und $w_2$ als die Gewichte.

Dadurch ist es vorteilhafterweise möglich, die Dynamisierung der Bereitstellung der ersten Winkelgeschwindigkeit zu beeinflussen, ohne Änderungen an der zweiten und dritten Steuerungseinheit vornehmen zu müssen.

In einer vorteilhaften Weiterbildung der Erfindung sind die Gewichte der Summanden während eines Betriebs der Vorrichtung durch die Vorrichtung parametrierbar.

Dadurch kann vorteilhafterweise die Dynamisierung der Bereitstellung der ersten Winkelgeschwindigkeit während des Betriebs beeinflusst werden, ohne die Vorrichtung nach einer Veränderung der Gewichte erneut starten zu müssen.

Gemäß einer vorteilhaften Ausgestaltung ist die Vorrichtung dazu ausgebildet, die erste Winkelgeschwindigkeit in Abhängigkeit der zweiten, dritten und einer vierten Winkelgeschwindigkeit zu ermitteln und bereitzustellen.

Dadurch ist es vorteilhafterweise möglich, mittels der vierten Winkelgeschwindigkeit als weitere Einflussgröße eine noch höhere Dynamisierung der Bereitstellung der ersten Winkelgeschwindigkeit bereitzustellen.

In einer vorteilhaften Weiterbildung der Erfindung wird die vierte Winkelgeschwindigkeit in Abhängigkeit einer 50 Hz oder 60 Hz Netzfrequenz ermittelt.

Dadurch kann vorteilhafterweise eine Integration in 50 Hz basierte Stromnetze, insbesondere in Europa oder in 60 Hz basierte Stromnetze, insbesondere in den USA realisiert werden.

Gemäß einer vorteilhaften Ausgestaltung wird die erste Winkelgeschwindigkeit als eine Eingangsgröße für einen Integrator verwendet, wobei der Integrator einen Phasenwinkel abhängig von der ersten Winkelgeschwindigkeit ermittelt und für die erste Steuerungseinheit bereitstellt, wobei der Sollstromstärkewert mittels der ersten Steuerungseinheit abhängig vom Phasenwinkel und der Spannungsamplitude ermittelt und für die Regelung bereitgestellt wird.

Dadurch ist es vorteilhafterweise möglich, einen dynamischen Sollstromstärkewert bereitzustellen, welche abhängig von den sich ändernden elektrischen Eingangsgrößen wenigstens zwei unterschiedliche Anregelzeiten aufweisen kann.

In einer vorteilhaften Weiterbildung der Erfindung verwendet die zweite Steuerungseinheit als elektrische Eingangsgrößen eine Sollwirkleistung und/oder eine Ausgangswirkleistung von einem Netzanschlusspunkt einer Photovoltaikanlage und/oder eine Spannungsamplitude.

Dadurch kann vorteilhafterweise eine dynamische Bestimmung des Sollstromstärkewertes zur Steuerung einer Photovoltaikanlage bereitgestellt werden, wobei die variierende Anregelzeit für den Sollstromstärkewert entweder die Ladung von Batteriespeichern der Photovoltaikanlage oder eine Einspeisung in ein Stromnetz abhängig von den elektrischen Eingangsgrößen begünstigt.

Gemäß einer vorteilhaften Ausgestaltung werden die erste Winkelgeschwindigkeit durch eine gewichtete Summe aus zweiter und dritter Winkelgeschwindigkeit ermittelt und bereitgestellt und die Gewichte der gewichteten Summe in Abhängigkeit zu einem Netzzustand und/oder einer Wetterlage parametriert, wobei eine vierte Winkelgeschwindigkeit in Abhängigkeit von einer 50 Hz oder 60 Hz Netzfrequenz auf die erste Winkelgeschwindigkeit addiert wird.

Der Netzzustand kann Informationen zur Auslastung, insbesondere Überlastung eines Stromnetzes, umfassen. Der Netzzustand kann hierbei einen aktuellen Zustand in Echtzeit abbilden und/oder eine Vorhersage des Netzzustandes umfassen.

Die Wetterlage kann Informationen zu einer vorliegenden Bewölkung und/oder weiteren Wetterparametern umfassen, wobei für eine vorteilhafte Ausgestaltung eine aktuell vorliegende Wetterlage und/oder eine in der Zukunft erwartete Wetterlage als eine Datenbasis dienen kann. Insbesondere sind die Wetterparameter eine Bewölkung, eine Lufttemperatur, eine Luftfeuchte, ein Luftdruck, eine Drucktendenz, eine Windrichtung und Windgeschwindigkeit, ein Niederschlag, eine Globalstrahlung und/oder eine Sichtweite.

Dadurch ist es vorteilhafterweise möglich, den Einfluss der zweiten und dritten Steuerungseinheit über die Gewichte zu steuern, wobei abhängig von der Wetterlage und/oder dem Netzzustand die dritte Steuerungseinheit und/oder die zweite Steuerungseinheit einen stärkeren Einfluss auf die Bereitstellung des Sollstromstärkewertes hat. Die Abhängigkeit von der Wetterlage ist insbesondere vorteilhaft, wenn eine unregelmäßige Bewölkung für eine häufige Änderung einer Globalstrahlung sorgt und die Photovoltaikanlage entweder eine Netzeinspeisung oder eine Ladung des Batteriespeichers favorisieren soll.

In einer vorteilhaften Weiterbildung der Erfindung werden mittels der Regelung ein phasenwinkelbehafteter Spannungswert in Abhängigkeit vom Sollstromstärkewert und einem Laststromstärkewert ermittelt und bereitgestellt.

Der Laststromstärkewert kann neben einem Wert für eine Stromstärke auch einen Phasenwinkel umfassen. Mit anderen Worten kann der Laststromstärkewert mit einem Last-Phasenwinkel behaftet sein.

Dadurch kann vorteilhafterweise ein phasenwinkelbehafteter Spannungswert, insbesondere für die Steuerung eines Wechselrichters der Photovoltaikanlage, bereitgestellt werden. Das ist dann der Fall, wenn der Laststromstärkewert einen Laststrom an einem Ausgang des Wechselrichters repräsentiert und die Regelung einen phasenwinkelbehafteten Spannungswert in Abhängigkeit zum Laststrom und dem Sollstromstärkewert regelt.

Gemäß einer vorteilhaften Ausgestaltung werden durch die Regelung den phasenwinkelbehafteten Spannungswert als eine Eingangsgröße für einen Pulsweitenmodulator verwendet, wobei mittels des Pulsweitenmodulators ein Steuersignal erzeugt und an einen Wechselrichter übertragen wird.

Dadurch ist es vorteilhafterweise möglich, marktverfügbare Wechselrichter direkt mit einem pulsweitenmodulierten Steuersignal zu steuern. Die Implementierung einer zusätzlichen technischen Schnittstelle entfällt vorteilhafterweise.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    ein Ausführungsbeispiel einer Vorrichtung zur Bestimmung eines Sollstromstärkewertes für eine Regelung in einer Komponentensichtweise;

Figur 2    ein Ausführungsbeispiel der Vorrichtung mit einer zuschaltbaren Variante einer dritten Steuerungseinheit; und

Figur 3    ein Ausführungsbeispiel der Vorrichtung mit einer Anbindung an einen Wechselrichter, einen Batteriespeicher und einem Stromnetz.

Gleichartige, gleichwertige oder gleichwirkende Elemente können in einer der Figuren oder in den Figuren mit denselben Bezugszeichen versehen sein.

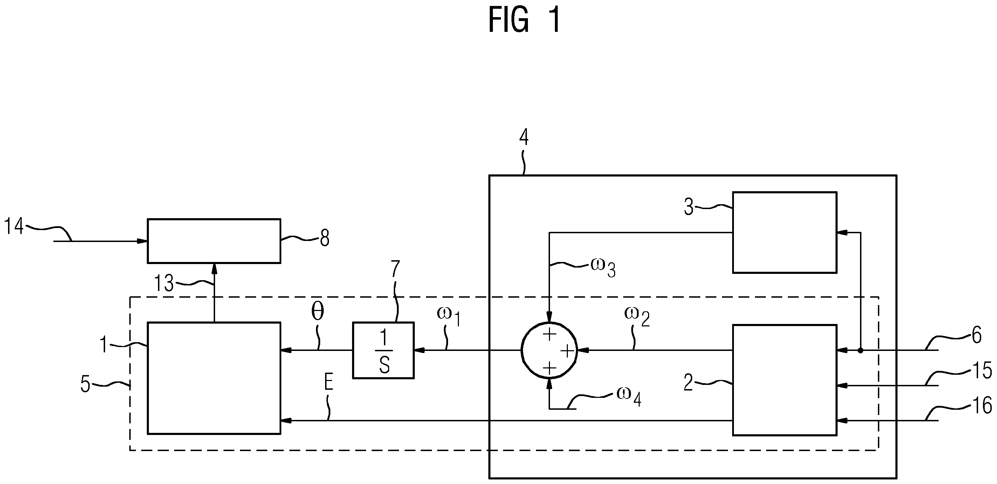

Die Figur 1 zeigt schematisch eine Vorrichtung 4, umfassend zwei Steuerungseinheiten 2, 3. Die zweite Steuerungseinheit 2 und die erste Steuerungseinheit 1 bilden eine virtuelle Synchronmaschine aus, wobei die zweite Steuerungseinheit 2 einen mechanischen Anteil und die erste Steuerungseinheit 1 einen elektrischen Anteil der virtuellen Synchronmaschine ausbildet. Die beiden Anteile 1, 2 der virtuellen Synchronmaschine sind mit einer gestrichelten Linie eingerahmt.

Die Steuerungseinheiten 2, 3 stellen die Winkelgeschwindigkeiten $\omega_2$, $\omega_3$ abhängig von den elektrischen Eingangswerten 6, 15, 16 bereit. Hierzu wird die zweite Winkelgeschwindigkeit $\omega_2$ durch eine Gleichung b) mit

$$\omega_2 = \frac{1}{\omega}(P_0 - P_{el}) \cdot \frac{1}{Js+D}$$

bestimmt und die dritte Winkelgeschwindigkeit $\omega_3$ durch eine Gleichung c) mit

$$\omega_3 = P_0 \cdot \frac{as}{bs+1}$$

bestimmt.

Die Variablen der Gleichungen b), c) sind wie folgt definiert. Die Variable $P_0$ stellt eine SollWirkleistung dar, also den Wert einer Wirkleistung, welcher durch Steuerung oder Regelung erreicht werden kann. Die Variable $P_{el}$ stellt den Wert einer tatsächlichen Ausgangswirkleistung dar. Die Variable $J$ modelliert das Trägheitsmoment einer virtuellen Masse der virtuellen Synchronmaschine und die Variable D modelliert einen Dämpfungsfaktor. Die Variable $s$ stellt eine komplexe Frequenzvariable dar mit der Gleichung $s = \sigma + j\omega$, wobei diese aus einem Realteil $\sigma$ (Dämpfung) und einem Imaginärteil $j\omega$ (Frequenz) besteht. Die Variablen a und b modellieren einen Verstärkungsfaktor.

Gemäß der vorliegenden Ausgestaltung erfolgt eine Bereitstellung der ersten Winkelgeschwindigkeit $\omega_1$ durch eine Gleichung a) mit $\omega_1 = \omega_2 + \omega_3 + \omega_4$. Die vierte Winkelgeschwindigkeit $\omega_4$ kann hierbei durch eine Gleichung d) mit $\omega_4 = 2 \cdot \pi \cdot f$ abhängig von einer Netzfrequenz mit dem Parameter f eines Stromnetzes festgelegt werden.

Ein Integrator 7 empfängt die erste Winkelgeschwindigkeit $\omega_1$ als eine Eingangsgröße und stellt einen abhängigen Phasenwinkel $\theta$ als eine Ausgangsgröße für die erste Steuerungseinheit 1 bereit.

Die erste Steuerungseinheit 1 empfängt als Eingangsgrößen den Phasenwinkel $\theta$ von dem Integrator 7 und eine Spannungsamplitude E, welche von der zweiten Steuerungseinheit 2 bereitgestellt wird.

Abhängig vom Phasenwinkel $\theta$ und der Spannungsamplitude E bestimmt die erste Steuerungseinheit 1 einen Sollstromstärkewert 13 für eine Regelung 8.

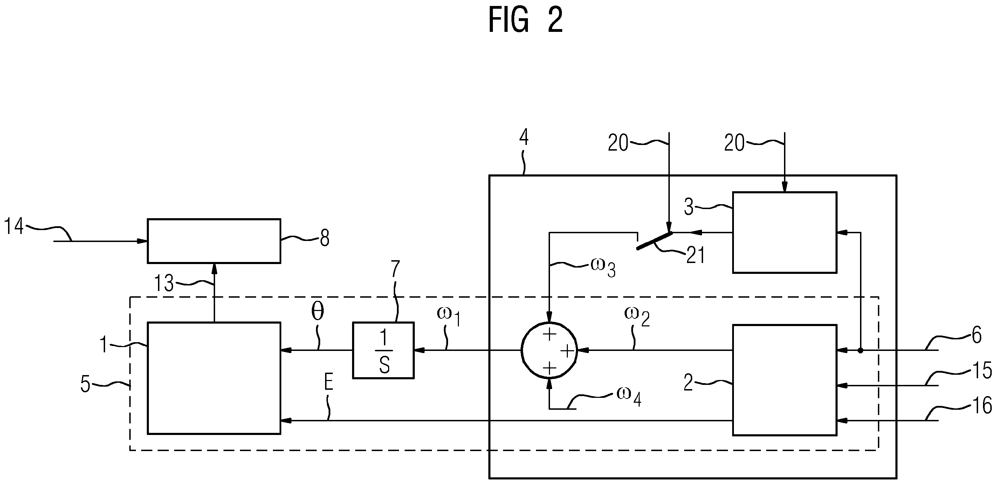

Die Figur 2 zeigt schematisch eine Ausgestaltung der Vorrichtung 4 aus Fig. 1. umfassend die Steuerungseinheiten 2, 3, wobei die Steuerungseinheit 3 in einer Kombination aus zwei verschiedenen Ausprägungen dargestellt ist, welche dazu dienen die Steuerungseinheit 3 zuschaltbar auszubilden.

In einer ersten Ausprägung ist die Steuerungseinheit 3 mittels eines durch ein Schaltsignal 20 bedienbaren Schaltkontakt 21 zuschaltbar. Hierbei wird durch Schließen des Schaltkontakts 21 eine Weitergabe einer dritten Winkelgeschwindigkeit $\omega_3$ ermöglicht und durch Öffnen des Schaltkontakts 21 wird die Weitergabe der dritten Winkelgeschwindigkeit $\omega_3$ vermieden. In einer zweiten Ausprägung wird mittels des Schaltsignals 20 ein Parameter der dritten Steuerungseinheit 3 festgelegt, wodurch diese deaktiviert wird.

Neben einer Parametrierung der Steuerungseinheit 3 die zu ihrer Deaktivierung führt, kann die Steuerungseinheit 3 in einer weiteren Ausprägung unmittelbar durch das Schaltsignal 20 abgeschaltet werden.

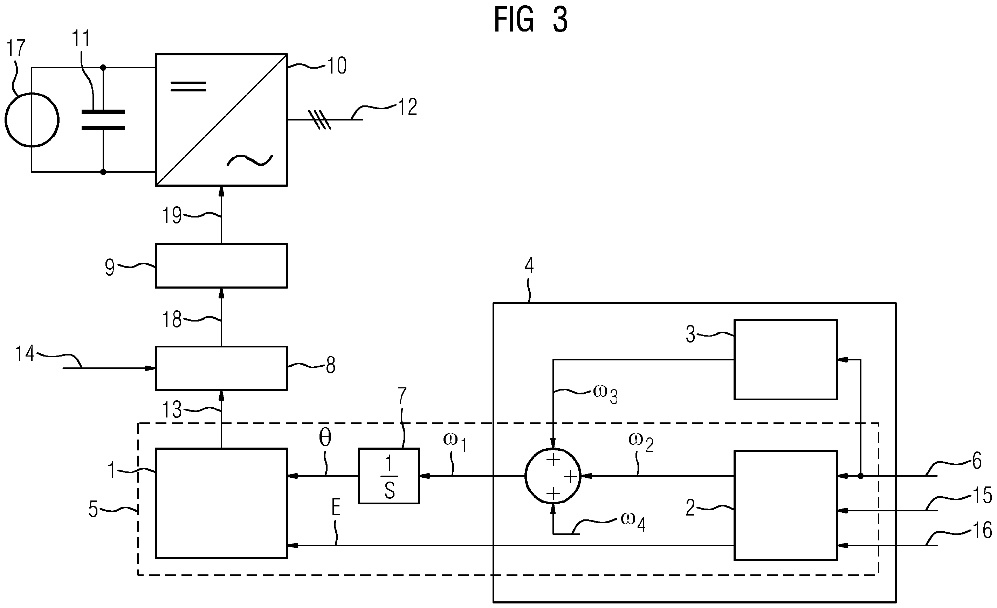

Die Figur 3 zeigt schematisch eine Ausgestaltung der Vorrichtung 4 aus Fig. 1, umfassend die Steuerungseinheiten 2, 3.

Gemäß der vorliegenden Ausgestaltung dient ein von einer ersten Steuerungseinheit 1 bereitgestellter Sollstromstärkewert 13 als ein Eingangswert für eine Regelung 8.

Die Regelung 8 stellt einen phasenwinkelbehafteten Spannungswert 18 in Abhängigkeit von der Sollstromstärke 13 und einer Laststromstärkewert 14 bereit. Der Lastromstärkewert kann einen Laststrom an einem Ausgang eines Wechselrichters 10 repräsentieren, insbesondere kann dieser Ausgang an einen Netzanschlusspunkt 12 angeschlossen sein.

Der phasenwinkelbehaftete Spannungswert 18 dient als Eingangswert für einen Pulsweitenmodulator 9, welcher ein vom phasenwinkelbehafteten Spannungswert 18 abhängiges pulsweitenmoduliertes Steuersignal 19 an den Wechselrichter 10 überträgt.

Der Wechselrichter 10 ist mit einem Batteriespeicher 11 und einer Photovoltaikanlage 17 verbunden.

Angeschlossen an die Photovoltaikanlage 17, empfangen die Steuerungseinheiten 2,3 elektrische Eingangsgrößen 6, 15, 16 als kontinuierliche oder diskrete Werte, wobei die elektrische Eingangsgröße 6 von beiden Steuerungseinheiten 2,3 empfangen wird und eine Sollwirkleistung für den Wechselrichter 10 der Photovoltaikanlage 17 ist. Diese Sollwirkleistung kann variieren, insbesondere wenn durch eine wechselnde Bewölkung und einer sich dadurch rasch ändernden Globalstrahlung die Leistungsabgabe der Photovoltaikanlage 17 verändert. Der Wechselrichter 10 muss hierbei dynamisch die Sollwirkleistung anpassen, sofern eine Einspeisung in das Stromnetz gegenüber einer Ladung des Batteriespeichers 11 präferiert wird.

Neben der Sollwirkleistung als elektrische Eingangsgröße 6, empfängt die Steuerungseinheit 2 eine Ausgangswirkleistung als die elektrischen Eingangsgröße 15 und eine Spannungsamplitude E als elektrische Eingangsgröße 16. Die Spannungsamplitude E wird durch die Steuerungseinheit 2 unverändert weitergegeben.

Durch die unterschiedlichen Anregelzeiten der beiden Steuerungseinheiten 2,3 haben diese abhängig von einer Zeit einen unterschiedlich großen Einfluss auf eine Bereitstellung einer ersten Winkelgeschwindigkeit $\omega_1$.

Eine Änderung der Sollwirkleistung bewirkt jeweils eine Änderung der beiden Winkelgeschwindigkeiten $\omega_2$, $\omega_3$. Andererseits bewirkt eine Änderung der Ausgangswirkleistung als elektrische Eingangsgröße 15, lediglich eine Änderung der zweiten Winkelgeschwindigkeit $\omega_2$.

In der vorliegenden Ausgestaltung ist die Anregelzeit der Steuerungseinheit 3 kleiner als die Anregelzeit der Steuerungseinheit 2, was bei einer sich ändernden Sollwirkleistung bewirkt, dass die Änderung der dritten Winkelgeschwindigkeit $\omega_3$ schneller erfolgt als die Änderung der zweiten Winkelgeschwindigkeit $\omega_2$.

Dieses schnellere Anregeln der Steuerungseinheit 3 bewirkt eine dynamischere Bereitstellung eines Phasenwinkels $\theta$ als eine Antwort auf die sich ändernde Sollwirkleistung.

Diese dynamischere Bereitstellung des Phasenwinkels $\theta$ ermöglicht eine Dynamisierung der Bereitstellung eines Sollstromstärkewerts 13 mittels der Steuerungseinheit 1.

Die Steuerungseinheit 1 wiederum stellt auf Basis der dynamisierten Bereitstellung des Sollstromstärkewertes 13 einen phasenwinkelbehafteten Spannungswert 18 als Ergebnis einer Stromregelung 8 in Abhängigkeit zu einem Laststromstärkewert 14 bereit.

In einem letzten Schritt wird der phasenwinkelbehaftete Spannungswert 18 für die Erzeugung eines pulsweitenmodulierten Steuersignals 19 genutzt, um den Wechselrichter 10 zu steuern.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| 1 | Erste Regelungseinheit |
|---|---|
| 2 | Zweite Regelungseinheit |
| 3 | Dritte Regelungseinheit |
| 4 | Vorrichtung |
| 5 | Virtuelle Synchronmaschine |
| 6 | Elektrische Eingangsgröße |
| 7 | Integrator |
| 8 | Stromregler |
| 9 | Pulsweitenmodulator |
| 10 | Wechselrichter |
| 11 | Batteriespeicher |
| 12 | Netzanschlusspunkt |
| 13 | Sollstromstärkewert |
| 14 | Laststromstärkewert |
| 15 | Elektrische Eingangsgröße |
| 16 | Elektrische Eingangsgröße |
| 17 | Photovoltaikanlage |
| 18 | Phasenwinkelbehafteter Spannungswert Steuersignal |
| 19 | Schaltsignal |
| 20 | Schaltkontakt |
| $\omega_1$ | Erste Winkelgeschwindigkeit |
| $\omega_2$ | Zweite Winkelgeschwindigkeit |
| $\omega_3$ | Dritte Winkelgeschwindigkeit |
| $\theta$ | Phasenwinkel |
| E | Spannungsamplitude |

**Patentansprüche**

1. Vorrichtung (4) zur Bereitstellung einer ersten Winkelgeschwindigkeit ($\omega_1$) und einer Spannungsamplitude (E) zur Bestimmung eines Sollstromstärkewertes (13) für eine Regelung (8), wobei die Vorrichtung (4) eine zweite Steuerungseinheit (2) umfasst, wobei eine erste Steuerungseinheit (1) als ein elektrischer Anteil und die zweite Steuerungseinheit (2) als ein mechanischer Anteil einer Übertragungsfunktion einer virtuellen Synchronmaschine (5) ausgebildet sind, wobei die zweite Steuerungseinheit (2) als eine Pf-Kopplung ausgebildet ist, welche zu einer Verwendung wenigstens einer elektrischen Eingangsgröße (6, 15, 16) und zur Bereitstellung der Spannungsamplitude (E) und einer zweiten Winkelgeschwindigkeit ($\omega_2$) ausgebildet ist,
**dadurch gekennzeichnet,**
**dass** die Vorrichtung (4) eine dritte Steuerungseinheit (3) umfasst, welche dazu ausgebildet ist, eine

dritte Winkelgeschwindigkeit ($\omega_3$) in Abhängigkeit der elektrischen Eingangsgröße (6) bereitzustellen, wobei die Vorrichtung (4) dazu ausgebildet ist, die erste Winkelgeschwindigkeit ($\omega_1$) in Abhängigkeit der zweiten und dritten Winkelgeschwindigkeit ($\omega_2$, $\omega_3$) zu ermitteln und bereitzustellen.

2. Vorrichtung (4) nach Anspruch 1, **dadurch gekennzeichnet, dass** die Vorrichtung (4) einen Integrator (7) umfasst, wobei die erste Winkelgeschwindigkeit ($\omega_1$) als eine Eingangsgröße für den Integrator (7) vorgesehen ist, wobei der Integrator (7) dazu ausgebildet ist, einen Phasenwinkel ($\theta$) abhängig von der ersten Winkelgeschwindigkeit ($\omega_1$) zu ermitteln und für die erste Steuerungseinheit (1) bereitzustellen.

3. Vorrichtung (4) nach Anspruch 1 oder 2, **dadurch gekennzeichnet, dass** die zweite und dritte Steuerungseinheit (2,3) jeweils eine Übertragungsfunktion mit einer zugehörigen Anregelzeit aufweist, wobei die Anregelzeit der Übertragungsfunktion der dritten Steuerungseinheit (3) kleiner oder gleich der Anregelzeit der Übertragungsfunktion der zweiten Steuerungseinheit (2) ist.

4. Vorrichtung (4) gemäß einem der vorhergehenden Ansprüche, **dadurch gekennzeichnet, dass** die zweite Steuerungseinheit (2) dazu ausgebildet ist, als elektrische Eingangsgröße wenigstens eine Wirkleistung und/oder eine Spannungsamplitude zu verwenden.

5. Vorrichtung (4) gemäß einem der vorhergehenden Ansprüche, **dadurch gekennzeichnet, dass** die dritte Steuerungseinheit (3) dazu ausgebildet ist, über ein Schaltsignal (20) zuschaltbar zu sein.

6. Vorrichtung (4) gemäß einem der vorherigen Ansprüche, **dadurch gekennzeichnet, dass** die erste Winkelgeschwindigkeit ($\omega_1$) eine gewichtete Summe aus der zweiten und dritten Winkelgeschwindigkeit ($\omega_2$, $\omega_3$) umfasst.

7. Vorrichtung (4) gemäß Anspruch 6, **dadurch gekennzeichnet, dass** die Gewichte der Summanden während eines Betriebs der Vorrichtung (4) durch die Vorrichtung (4) parametrierbar sind.

8. Vorrichtung (4) gemäß einem der vorhergehenden Ansprüche, **dadurch gekennzeichnet, dass** die Vorrichtung (4) dazu ausgebildet ist, die erste Winkelgeschwindigkeit ($\omega_1$) in Abhängigkeit der zweiten, dritten und einer vierten Winkelgeschwindigkeit ($\omega_2$, $\omega_3$, $\omega_4$) zu ermitteln und bereitzustellen.

9. Vorrichtung (4) gemäß Anspruch 8, **dadurch gekennzeichnet, dass** die vierte Winkelgeschwindigkeit ($\omega_4$) in Abhängigkeit einer 50 Hz oder 60 Hz Netzfrequenz ermittelt wird.

10. Verfahren zur Bereitstellung einer ersten Winkelgeschwindigkeit ($\omega_1$) und einer Spannungsamplitude (E) zur Bestimmung eines Sollstromstärkewertes (13) für eine Regelung (8), wobei eine erste Steuerungseinheit (1) als ein elektrischer Anteil und eine zweite Steuerungseinheit (2) als ein mechanischer Anteil einer Übertragungsfunktion einer virtuellen Synchronmaschine (5) ausgebildet sind, wobei die zweite Steuerungseinheit (2) als eine Pf-Kopplung ausgebildet ist, welche wenigstens eine elektrische Eingangsgröße (6, 15, 16) verwendet und die Spannungsamplitude (E) und eine zweite Winkelgeschwindigkeit ($\omega_2$) bereitstellt,
**dadurch gekennzeichnet,**
**dass** eine dritte Winkelgeschwindigkeit ($\omega_3$) mittels einer dritten Steuerungseinheit (3) und in Abhängigkeit der elektrischen Eingangsgröße (6) bereitgestellt wird, wobei die erste Winkelgeschwindigkeit ($\omega_1$) in Abhängigkeit der zweiten und dritten Winkelgeschwindigkeit ($\omega_2$, $\omega_3$) ermittelt und bereitgestellt wird.

11. Verfahren gemäß Anspruch 10, **gekennzeichnet dadurch, dass** die erste Winkelgeschwindigkeit ($\omega_1$) als eine Eingangsgröße für einen Integrator (7) verwendet wird, wobei der Integrator (7) einen Phasenwinkel ($\theta$) abhängig von der ersten Winkelgeschwindigkeit ($\omega_1$) ermittelt und für die erste Steuerungseinheit (1) bereitstellt, wobei der Sollstromstärkewert (13) mittels der ersten Steuerungseinheit (1) abhängig vom Phasenwinkel ($\theta$) und der Spannungsamplitude (E) ermittelt und für die Regelung (8) bereitgestellt wird.

12. Verfahren gemäß Anspruch 10 oder 11, **gekennzeichnet dadurch, dass** für die zweite Steuerungseinheit (2) als elektrische Eingangsgrößen eine Sollwirkleistung (6) und/oder eine Ausgangswirkleistung (15) von einem Netzanschlusspunkt (12) einer Photovoltaikanlage (17) und/oder eine Spannungsamplitude (16) verwendet wird.

13. Verfahren gemäß einem der Ansprüche 10 bis 12, **gekennzeichnet dadurch, dass** die erste Winkelgeschwindigkeit ($\omega_1$) durch eine gewichtete Summe aus zweiter und dritter Winkelgeschwindigkeit ($\omega_2$, $\omega_3$) ermittelt und bereitgestellt wird und die Gewichte der gewichteten Summe in Abhängigkeit zu einem Netzzustand und/oder einer Wetterlage parametriert werden, wobei eine vierte Winkelgeschwindigkeit ($w_4$) abhängig von einer 50 Hz oder 60 Hz Netzfrequenz auf die erste Winkelgeschwindigkeit ($\omega_1$) addiert wird.

14. Verfahren gemäß einem der Ansprüche 10 bis 13, **gekennzeichnet dadurch, dass** mittels der Regelung (8) ein phasenwinkelbehafteter Spannungswert (18) in Abhängigkeit vom Sollstromstärkewert (13) und einem Laststromstärkewert (14) ermittelt und bereitgestellt wird.

15. Verfahren gemäß einem der Ansprüche 10 bis 14, **gekennzeichnet dadurch, dass** durch die Regelung (8) der phasenwinkelbehaftete Spannungswert (18) als eine Eingangsgröße für einen Pulsweitenmodulator (9) verwendet wird, wobei mittels des Pulsweitenmodulators (9) ein Steuersignal (19) erzeugt und an einen Wechselrichter (10) übertragen wird.

**FIG 1**

FIG 2

FIG 3

Europäisches Patentamt
European Patent Office
Office européen des brevets

**EUROPÄISCHER RECHERCHENBERICHT**

Nummer der Anmeldung

EP 24 19 6574

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 107 453 412 B (UNIV NORTH CHINA TECHNOLOGY; CLETA BEIJING SCIEN TECH DEV CO LTD) 26. November 2019 (2019-11-26) | 1-5,8-15 | INV. H02J3/38 H02M7/48 |
| A | * Absatz [0062] - Absatz [0090]; Abbildungen 1-3 * <br> * "Background Art" * <br> ----- | 6,7 | |
| A | LUCERO-TENORIO MIRIAM ELIZABETH ET AL: "Virtual Synchronous Generator Control Integrated into a Microgrid", 2023 IEEE SEVENTH ECUADOR TECHNICAL CHAPTERS MEETING (ECTM), IEEE, 10. Oktober 2023 (2023-10-10), Seiten 1-6, XP034466237, DOI: 10.1109/ETCM58927.2023.10308801 [gefunden am 2023-11-10] <br> * Zusammenfassung * <br> * II. Modeling; Abbildungen 1-4 * <br> ----- | 1-15 | |
| A | RAVINDRA G ET AL: "Performance Analysis of VSG in a Renewable Energy Sources Based Microgrid", 2024 10TH INTERNATIONAL CONFERENCE ON ELECTRICAL ENERGY SYSTEMS (ICEES), IEEE, 22. August 2024 (2024-08-22), Seiten 1-6, XP034770947, DOI: 10.1109/ICEES61253.2024.10776931 [gefunden am 2024-12-10] <br> * Zusammenfassung * <br> * II. Basic configuration, III. System overview of islanded microgrid; Abbildungen 2.1, 3.1 * <br> ----- | 1-15 | RECHERCHIERTE SACHGEBIETE (IPC) <br><br> H02J <br> H02M |

Der vorliegende Recherchenbericht wurde für alle Patentansprüche erstellt

| Recherchenort | Abschlußdatum der Recherche | Prüfer |
|---|---|---|
| München | 5. Februar 2025 | Landi, Matteo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 6574

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2025

| Im Recherchenbericht angeführtes Patentdokument | Datum der Veröffentlichung | Mitglied(er) der Patentfamilie | Datum der Veröffentlichung |
|---|---|---|---|
| CN 107453412 B | 26-11-2019 | KEINE | |

Für nähere Einzelheiten zu diesem Anhang : siehe Amtsblatt des Europäischen Patentamts, Nr.12/82

EPO FORM P0461